**Europäisches Patentamt**

**European Patent Office**

**Office européen des brevets**

(11) Veröffentlichungsnummer: **0 006 134**
A1

# (12) EUROPÄISCHE PATENTANMELDUNG

(21) Anmeldenummer: **79101482.2**

(22) Anmeldetag: **15.05.79**

(51) Int. Cl.³: **H 04 Q 11/04, H 04 Q 3/54**

(30) Priorität: **14.06.78 DE 2826062**

(43) Veröffentlichungstag der Anmeldung: **09.01.80**
**Patentblatt 80/1**

(84) Benannte Vertragsstaaten: **AT CH DE FR GB IT NL**

(71) Anmelder: **SIEMENS AKTIENGESELLSCHAFT Berlin und München, Postfach 261, D-8000 München 22 (DE)**

(72) Erfinder: **Botsch, Dietrich, Dr., Bertelestrasse 60a, D-8000 München 71 (DE)**
Erfinder: **Brüninghaus, Karl, Dipl.-Ing., Buchenstrasse 19, D-8021 Sauerlach (DE)**

(54) Indirekt gesteuerte Vermittlungsanlage mit Zeitkanalverbindungswegen, insbesondere Fernsprechvermittlungsanlage.

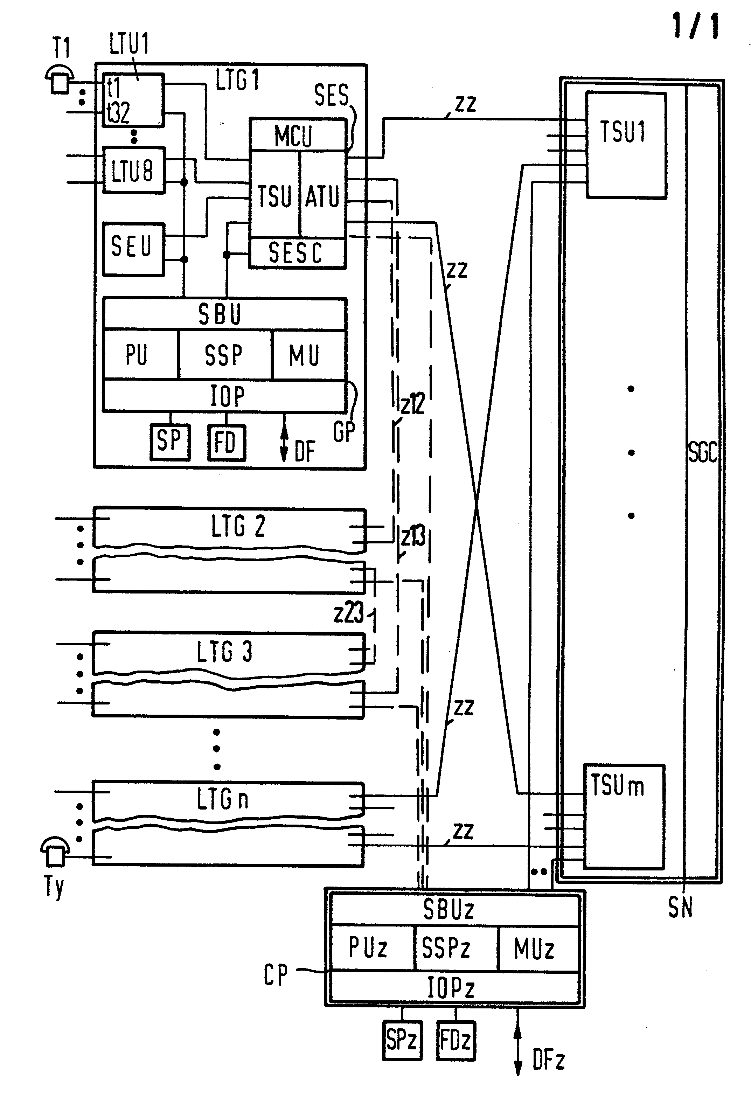

㉗ Die Anlage hat mehrere dezentrale Anlageteile (LTG1...LTGm). Zu jedem Anlagenteil gehört ein einstufiger blockierungsfreier Zeitkanalkoppler (TSU) samt Steuerwerk (GP). Die verschiedenen Anlagenteile sind mit einem zentralen Steuerwerk (CP) zusammengeschaltet. Jedes dezentrale Steuerwerk (GP) wickelt Vermittlungsfunktionen ab, die für jede Verbindungsanforderung anfallen und unter Zeitzwang stehen. Das zentrale Steuerwerk (CP) wickelt Vermittlungsfunktionen ab, die den Zusammenhang der dezentralen Zeitkanalkoppler der Anlage und deren Zusammenhang mit anderen Anlagen berücksichtigen müssen. Die Steuerwerke haben Speicher (MU, MUz), in denen variable und permanente Daten in zweckmäßiger Weise verteilt sind (Fig. 1).

- 1 -

SIEMENS AKTIENGESELLSCHAFT  Unser Zeichen
Berlin und München   VPA **78 P 6 1 1 1** EUR

Indirekt gesteuerte Vermittlungsanlage mit Zeitkanalverbindungswegen, insbesondere Fernsprechvermittlungsanlage.

Die Erfindung bezieht sich auf den Aufbau und die Arbeitsweise von indirekt gesteuerten Vermittlungsanlagen mit Zeitkanalverbindungswegen, wie sie insbesondere für Fernsprechzwecke vorgesehen sind. Es ist bereits bekannt, solche Vermittlungsanlagen in verschiedene Teile zu gliedern und dabei mehrere dezentrale Zeitkanalkoppler vorzusehen, über die Zeitkanäle geführt sind, welche für Gesprächsverbindungen erforderliche Sprachsignale übertragen, die auch in Form von PCM-Signalen auftreten können (siehe z.B. DAS 22 11 400, 22 25 702, 22 25 703; DPS 24 54 144).

Die Erfindung stellt sich nun die Aufgabe, für eine derartige Anlage eine zweckmäßige Gliederung bezüglich Zeitkanalkopplern und Steuerwerken vorzusehen und dabei auch eine zweckmäßige Arbeitsweise dieser Steuerwerke festzulegen.

Hlr 1 EK / 12.6.1978

Die Erfindung betrifft also eine indirekt gesteuerte Vermittlungsanlage mit Zeitkanalverbindungswegen, insbesondere Fernsprechvermittlungsanlage, welche mehrere dezentrale Zeitkanalkoppler hat, an die die Teilnehmeranschlußschaltungen angeschlossen sind. Gemäß der Erfindung ist diese Anlage dadurch gekennzeichnet, daß jeder dezentrale Zeitkanalkoppler einstufig ist und mit einem eigenen dezentralen Steuerwerk ausgerüstet ist, das Vermittlungsfunktionen abwickelt, die für jede Verbindungsanforderung anfallen und unter Zeitzwang stehen, wie das Abfragen von Teilnehmerschaltungen, die Verarbeitung von Vermittlungssignalen, die Gebührenerfassung, die Lieferung von Einstellbefehlen für die Kopplersteuerung, und daß außerdem ein zentrales Steuerwerk vorhanden ist, das Vermittlungsfunktionen abwickelt, die den Zusammenhang der dezentralen Zeitkanalkoppler der Anlage und deren Zusammenhang mit anderen Anlagen berücksichtigen müssen und die Steuerwerke der dezentralen Zeitkanalkoppler entlasten, wie die Bewertung von gewählten Ziffern von Rufnummern, die Suche von zu benutzenden Koppelfeldausgängen, die Suche und Auswahl von Verbindungswegen und die Leitweglenkung.

Bei einer derartigen Vermittlungsanlage hat das zentrale Steuerwerk keine Routineaufgaben, die unter besonders großem Zeitzwang stehen. Dies erleichtert die Zusammenarbeit mit den dezentralen Steuerwerken. Die Verarbeitung von Vermittlungssignalen in den dezentralen Steuerwerken ermöglicht vorteilhafterweise, daß der Austausch von Meldungen zwischen den dezentralen Steuerwerken und dem zentralen Steuerwerk über eine standardisierte Funktionsschnittstelle abgewickelt werden kann. Die Art des jeweils angewendeten Signalisierungssystems hat ja keine Rückwirkung auf die Arbeitsweise und auf den Schaltungsaufbau des zentralen Steuerwerks. Dabei können verschiedene Signalisierungssysteme vorgesehen sein, wie z.B. Gleichstromsignalisierung, Wechselstromsignalisierung, Mehrfrequenzencodezeichensignalisierung oder digitale Signalisierung.

Beispiele für die erfindungsgemäße Gliederung einer Vermittlungsanlage und für die Arbeitsweise der zugehörigen Teileinrichtungen werden im folgenden anhand der Figur näher erläutert. Die Einzelheiten der Anlage sind hier nur soweit gezeigt, wie es für die Erfindung von Bedeutung ist, die sich in erster Linie auf die Gliederung in verschiedene Teileinrichtungen auswirkt. Dort ist der Anlagenteil LTG1 gezeigt, der den Zeitkanalkoppler TSU hat, der mit der Kopplersteuerung SESC und mit der Dämpfungsschaltung ATU ausgerüstet ist. Die Kopplersteuerung SESC bekommt Einstellbefehle von dem dezentralen Steuerwerk GP. Die Dämpfungsschaltung ATU kann Dämpfungsunterschiede bei den über Teilnehmeranschlußschaltungen an den Zeitkanalkoppler TSU angeschlossenen Teilnehmerleitungen ausgleichen, die zu den Teilnehmerstellen, wie zu der Teilnehmerstelle T1, führen. Zur Teilnehmerstelle T1 gehört die Teilnehmeranschlußschaltung t1. Die Teilnehmeranschlußschaltungen sind hier zu Mehrfachanschlußschaltungen gruppenweise zusammengefaßt. So sind die Teilnehmeranschlußschaltungen t1...t32 zur Mehrfachanschlußschaltung LTU1 zusammengefaßt. Jedoch haben die Teilnehmeranschlußschaltungen hier jeweils individuell BORSHT-Einrichtungen sowie gegebenenfalls auch individuell Filter und PCM-Codecs. Es sind bei dem Anlagenteil LTG1 mehrere Mehrfachanschlußschaltungen vorgesehen, zu denen auch noch die Mehrfachanschlußschaltung LTU8 gehört. Es können auch entsprechende Mehrfachanschlußschaltungen vorgesehen sein, bei denen mehrere Verbindungsleitungsanschlußschaltungen zusammengefaßt sind, an die Verbindungsleitungen angeschlossen sind, die beispielsweise zu anderen Vermittlungsanlagen führen. Falls von dort bereits Signale mit PCM-Code eintreffen, sind bei diesen Mehrfachanschlußschaltungen keine PCM-Codecs erforderlich. An den Zeitkanalkoppler TSU ist ferner die Signalschaltung SEU angeschlossen, in der Tongenerator, Rufgenerator, Codesender- und -empfänger zusammengefaßt sind. Diese Signalschaltung kann demgemäß die verschiedenen Hörtöne sowie Rufzeichen und sonstige benötigten Codezeichen liefern. Außerdem kann sie solche Zeichen auch für ihre Auswertung empfangen. Die Teilnehmeranschlußschaltungen t1...t32 und die weiteren sowie die Signalschaltung SEU sind an das Steuerwerk GP und an den Zeitkanalkoppler TSU angeschlossen. Diese Einrichtungen können daher über den Zeitkanalkoppler TSU fallweise miteinander verbunden werden. Außerdem können sie auch Steuersignale mit dem Steuerwerk GP austauschen, und zwar über den zugehörigen Zeichenpuffer SBU, mit dessen Hilfe ein störender Zeitzwang dabei vermieden wird. Zu diesem Steuerwerk gehört noch das Leitwerk SSP, das Verarbeitungswerk PU, der Speicher MU und die Ein-Ausgabesteuerung IOP, an die noch der Hintergrundspeicher FD und das Bedienungsgerät SP angeschlossen sind. Dort ist noch der Datenfernübertragungsanschluß DF vorgesehen, über den gegebenenfalls mit anderen Vermittlungen Steuerdaten ausgetauscht werden können.

Die erwähnten BORSHT-Einrichtungen dienen zur Speisung, zum Überspannungsschutz, zur Rufanschaltung, zur Signalisierung und für Prüfzwecke (siehe 1978 International Zurich Seminar on Digital Communications, Proceedings, IEEE Catalogue No. 78Ch1325-0 ASST, Seiten B2.1, A4.1). Diese Einrichtungen können auch zugleich zur 2/4-Drahtumsetzung dienen. Werden die Teilnehmeranschlußschaltungen von den zugehörigen Teilnehmerstellen nicht bereits mit PCM-Signalen beliefert, so sind die BORSHT-Einrichtungen jeweils noch durch Filter und PCM-Codecs zu ergänzen.

Bei der in der Figur gezeigten Anlage sind mehrere der beschriebenen Anlagenteile vorgesehen. Dort sind die Zeitkanalkoppler TSU der Anlagenteile LTG1, LTG2 und LTG3 in allen Kombinationen über die Zwischenleitungen z12, z13 und z23 verbunden, über die Zeitkanäle geführt sind. Ausserdem sind die zugehörigen Steuerwerke GP mit dem entsprechend aufgebauten zentralen Steuerwerk CP verbunden. Dieses zentrale Steuerwerk wirkt beim Aufbau und Abbau von Verbindungswegen mit, die über mindestens zwei der Anlagenteile LTG1, LTG2 und LTG3 führen. Dabei veranlaßt das zentrale Steuerwerk CP außerdem, daß die anderen Steuerwerke für den Aufbau und Abbau von Verbindungswegen sinngemäß in Anspruch genommen werden. Zum zentralen Steuerwerk CP gehören der Zeichenpuffer SBUz, das Leitwerk SSPz, das Verarbeitungswerk PUz, der Speicher MUz und die Ein-Ausgabesteuerung IOPz, an die der Hintergrundspeicher FDz und das Bedienungsgerät SPz angeschlossen sind. Außerdem ist dort noch der Datenfernübertragungsanschluß DFz vorgesehen.

Sind soviele Teilnehmerstellen an die Vermittlungsanlage anzuschließen, daß eine größere Anzahl der beschriebenen Anlagenteile benötigt werden, beispielsweise maximal ca. 15, so werden die Zeitkanalkoppler nicht direkt über Zwischenleitungen verbunden sondern über Zwischenleitungen zz mit einem einstufigen zentralen Koppelfeld SN mit mehreren Zeitkanalkopplern TSU1...TSUm verbunden. Dieses zentrale Koppelfeld hat die eigene Koppelfeldsteuerung SGC, das Einstellbefehle von dem zentralen Steuerwerk CP erhalten kann. Mit dem Koppelfeld SN sind über die erwähnten Zwischenleitungen hier die Anlagenteile LTG1... LTGn verbunden, an die die Teilnehmerstellen T1...Ty angeschlossen sind. Das zentrale Steuerwerk CP ist hier auch mit den Zeitkanalkopplern TSU1...TSUm des Koppelfeldes SN mit dem zentralen Steuerwerk CP verbunden. Es können alle in der Figur eingezeichneten gestrichelten Zwischenleitungen und Verbindungsleitungen entfallen. Die Anlagenteile LTG1...LTGn und das zentrale Koppelfeld SN können mit gleichen Zeitkanalkopplern ausgerüstet werden.

Wenn die Anzahl der Teilnehmerstellen sehr groß ist und damit die Anzahl der beschriebenen Anlagenteile ebenfalls ziemlich groß wird, ist das zentrale Koppelfeld SN mit mehreren Koppelstufen auszurüsten. Zweckmäßigerweise werden dabei zwei Zeitkanalkoppelstufen vorgesehen, zwischen denen eine oder mehrere Raumkanalkoppelstufen eingefügt sind (siehe DAS 20 21 049; 1978 International Zurich Seminar on Digital Communications, Proceedings IEEE, Catalogue No. 78CH1385-D ASST, Seiten B6.1 bis B6.6). Es empfiehlt sich dann, beim zentralen Koppelfeld SN auch Laufzeitausgleichseinrichtungen vorzusehen. Es werden dann störende Beschränkungen bezüglich der räumlichen Ausdehnung der Anlage vermieden. Laufzeitunterschiede wegen beträchtlicher räumlicher Ausdehnung können nämlich dann durch die Laufzeitausgleichseinrichtungen ausgeglichen werden.

Ein dezentrales Steuerwerk, wie das Steuerwerk GP, wickelt in jedem Fall solche Vermittlungsfunktionen ab, die für jede Verbindungsanforderung anfallen und die unter Zeitzwang stehen. Dazu gehören das Abfragen von Teilnehmerschaltungen, die Verarbeitung von Vermittlungssignalen, die insbesondere von Teilnehmerschaltungen oder über Verbindungsleitungen geliefert werden, die Gebührenerfassung, wobei z.B. Gebührenimpulse gezählt werden, und die Lieferung von Einstellbefehlen für die Kopplersteuerung. Das gegebenenfalls vorhandene zentrale Steuerwerk CP wikkelt dagegen Vermittlungsfunktionen ab, die den Zusammenhang der Teileinrichtungen der Anlage und deren Zusammenhang mit anderen Anlagen berücksichtigen müssen. Dazu gehören die Bewertung von gewählten Ziffern von Rufnummern, die Suche von zu benutzenden Koppelfeldausgängen, die Suche und Auswahl von Verbindungswegen und die Leitweglenkung.

Es empfiehlt sich, das zentrale Steuerwerk CP und das mehrstufige zentralen Koppelfeld SN jeweils doppelt vorzusehen. In der Figur ist dies dadurch angedeutet, daß diese Einrichtungen doppelt umrahmt sind. Dadurch wird ein Ausfall der gesamten Anlage vermieden, wenn eine der doppelt vorgesehenen Einrichtungen ausfällt. Ein Ausfall der nicht doppelt vorgesehenen Einrichtungen beeinträchtigt nicht die Arbeitsweise der übrigen Teile der Anlage und kann daher in der Regel in Kauf genommen werden. Die doppelt vorgesehenen Einrichtungen können sich auch gegenseitig überwachen, was insbesondere für das zentrale Steuerwerk gilt (siehe z.B. DOS 15 24 239; DAS 19 65 314, 21 04 298). Dabei können auch fehlerbehaftete Stellen innerhalb dieser Einrichtungen ermittelt, was zu einer schnellen Fehlerbeseitigung wesentlich beiträgt.

Auch bei den nicht doppelt vorgesehenen Einrichtungen können Methoden zur Fehlererkennung und Feststellung von fehlerbehafteten Stellen durchgeführt werden. Hierzu kann ein dezentrales Steuerwerk, wie das Steuerwerk GP, jeweils routinemäßig die zugehörigen Teileinrichtungen, wie das Koppelfeld SES, die Signalschaltung SEU, die Teilnehmeranschlußschaltungen $t...t32...$ überprüfen und mit Hilfe von Zeitmessungen überwachen. Mit Hilfe der Zeitmessungen wird überwacht, ob die verschiedenen Vermittlungsvorgänge in der vorgesehenen normalen Zeit ablaufen. Es wird Alarm veranlasst, falls unzulässige Zeitüberschreitungen auftreten. Die dezentralen Steuerwerke führen ferner im Zuge von Mitlaufüberwachungen Durchschalteprüfungen im Koppelnetz durch, wobei Prüfmuster abgeschickt werden, die dann wieder richtig zu empfangen sind. Dabei können sich auch Hinweise auf fehlerhafte Stellen ergeben. Fehlermeldungen können dann zum gegebenenfalls vorhandenen zentralen Steuerwerk CP weitergeleitet werden, das dann daraufhin Befehle zur Sperrung von fehlerhaften Teileinrichtungen oder zur Ersatzschaltung liefern kann. Diese Fehlermeldungen können über die sowieso vorhandenen Verbindungen zwischen den dezentralen Steuerwerken und dem zentralen Steuerwerk CP geschickt werden. Besondere Leitungssysteme für Fehlermeldungen oder Alarmsignale sind daher nicht erforderlich. Es sind auch keine besonderen Ersatzschalteleitungssysteme erforderlich. Die Ersatzschaltung wird durch das Vorhandensein der doppelt vorgesehenen Einrichtungen erleichtert.

Das Koppelfeld SES des Anlagenteils LTG1 und die anderen entsprechenden Koppelfelder können noch jeweils miteiner Multikonferenzeinrichtung MCU ausgerüstet sein. Es können daher auch Verbindungen zustande gebracht werden, bei denen mehr als zwei Teilnehmerstellen beteiligt sind. Diese Einrichtungen können auch dazu beitragen, die Funktionsfähigkeit eines Anlagenteils bei Störungen im zugehörigen Zeitkanalkoppler TSU aufrecht zu erhalten, wenn auch im eingeschränkten Umfang.

Die dezentralen und zentralen Steuerwerke einer Anlage haben jeweils einen Speicher, in dem für den Betrieb der Anlage erforderliche Daten zu speichern sind. Der Betrieb der Anlage wird erleichtert und verbessert, wenn diese Daten dort zweckmäßigerweise verteilt sind. Hierzu sind in einem Speicher eines Steuerwerks der ersten Ausbaustufe jeweils variable Daten enthalten, wie Daten über jeweils bestehende Verbindungen, Daten über Belegung von Zeitkanälen, Daten über verbindungsindividuell angefallene Gebührenimpulse. Im Speicher MUz eines zentralen Steuerwerks CP sind dagegen permanente Daten enthalten, wie Daten für die Ziffernbewertung und für die Verzonung, Daten über Teilnehmerstellen, Daten über den Zusammenhang der Koppelfelder und sonstiger Teileinrichtungen der Anlage. Außerdem sind dort auch noch variable Daten über den Belegungszustand von Teilnehmerstellen, Zwischenleitungen und Verbindungsleitungen und über den Betriebszustand von sonstigen Teileinrichtungen vorhanden. Dadurch, daß die erwähnten variablen Daten auch in den Speichern von dezentralen Steuerwerken enthalten sind, kann bei einer Störung eines zentralen Steuerwerkes der Vermittlungsbetrieb durch Ausnutzung dieser Daten weitergeführt werden. Sie können auch zur Rekonstruierung der im gestörten zentralen Steuerwerk enthaltenen variablen Daten benutzt werden. Es kann sich empfehlen, im Speicher des zentralen Steuerwerks als variable Daten von vornherein auch die Daten über jeweils bestehende Verbindungswege zu speichern.


1 Figur
8 Patentansprüche

<u>Patentansprüche</u>

1. Indirekt gesteuerte Vermittlungsanlage mit Zeitkanalverbindungswegen, insbesondere Fernsprechvermittlungsanlage, welche mehrere dezentrale Zeitkanalkoppler hat, an die die Teilnehmeranschlußschaltungen angeschlossen sind, d a d u r c h   g e k e n n z e i c h n e t , daß jeder dezentrale Zeitkanalkoppler (TSU) einstufig ist und mit einem eigenen dezentralen Steuerwerk (GP) ausgerüstet ist, das Vermittlungsfunktionen abwickelt, die für jede Verbindungsanforderung anfallen und unter Zeitzwang stehen, wie das Abfragen von Teilnehmerschaltungen, die Verarbeitung von Vermittlungssignalen, die Gebührenerfassung, die Lieferung von Einstellbefehlen für die Kopplersteuerung und daß außerdem ein zentrales Steuerwerk (CP) vorhanden ist, das Vermittlungsfunktionen abwickelt, die den Zusammenhang der dezentralen Zeitkanalkoppler (TSU) der Anlage und deren Zusammenhang mit anderen Anlagen berücksichtigen müssen und die Steuerwerke (GP) der dezentralen Zeitkanalkoppler (TSU) entlasten, wie die Bewertung von gewählten Ziffern von Rufnummern, die Suche von zu benutzenden Koppelfeldausgängen, die Suche und Auswahl von Verbindungswegen und die Leitweglenkung.

2. Vermittlungsanlage nach Anspruch 1, d a d u r c h   g e k e n n z e i c h n e t , daß jedes dezentrale Steuerwerk (GP) routinemäßig die zugehörigen Teileinrichtungen, wie Koppelfeld (SES) mit Zeitkanalkoppler (TSU), Signalschaltung (SEU), Teilnehmeranschlußschaltungen (t1...t32) überprüft und mit Hilfe von Zeitmessungen überwacht und daß das zentrale Steuerwerk (CP) aufgrund von Fehlermeldungen Befehle zur Sperrung von Teileinrichtungen oder zur Ersatzschaltung liefert.

3. Vermittlungsanlage nach Anspruch 1 oder 2, d a d u r c h
g e k e n n z e i c h n e t , daß jedes dezentrale Steuerwerk (GP) einen Speicher (MU) für variable Daten hat,
wie Daten über jeweils bestehende Verbindungen, Daten
über Belegung von Zeitkanälen, Daten über verbindungsindividuell angefallene Gebührenimpulse, daß dagegen das
zentrale Steuerwerk (CP) einen Speicher (MUz) hat, in
dem permanente Daten enthalten sind, wie Daten für die
Ziffernbewertung und für die Verzonung, Daten über Teilnehmerstellen, Daten über den Zusammenhang von Koppelfeldern und sonstigen Teileinrichtungen der Anlage, sowie
variable Daten über den Belegungszustand von Teilnehmerstellen, Zwischenleitungen und Verbindungsleitungen und
über den Betriebszustand von sonstigen Teileinrichtungen.

4. Vermittlungsanlage nach einem der vorhergehenden Ansprüche, d a d u r c h   g e k e n n z e i c h n e t ,
daß

a) jeder einstufige Zeitkanalkoppler (TSU) blockierungsfrei ist und mit einer Kopplersteuerung (SESC) und
mit einer Dämpfungsschaltung (ATU) ausgerüstet ist,
daß die Teilnehmeranschlußschaltungen (t1...t32...)
jeweils individuell BORSHT-Einrichtungen sowie gegebenenfalls Filter und PCM-Codecs haben, daß an den
Zeitkanalkoppler (TSU) ferner eine Signalschaltung
(SEU) mit Tongenerator, Rufgenerator, Codesender- und
-empfänger angeschlossen ist, daß die Teilnehmeranschlußschaltungen (t1...t32...), die Signalschaltung
(SEU) und die Kopplersteuerung (SESC) an das zugehörige dezentrale Steuerwerk (GP) mit Leitwerk (SSP),
Verarbeitungswerk (PU) und Speicher (MU) über einen
zugehörigen Zeichenpuffer (SBU) angeschlossen sind;

b) die Zeitkanalkoppler (TSU...) über Zeitkanäle verbunden sind und die dezentralen Steuerwerke (GP...) mit
dem entsprechend aufgebauten zentralen Steuerwerk (CP) verbunden sind, das beim Aufbau und Abbau von Verbindungswegen mitwirkt, die über mehrere erste Ausbaustufen (z.B. LTG1, LTG2) führen.

5. Vermittlungsanlage nach Anspruch 4, d a d u r c h g e k e n n z e i c h n e t , daß die dezentralen Zeitkanalkoppler (TSU...) bei größerer Anzahl (max. ca. 15) statt direkt über Zeitkanäle aufweisende Zwischenleitungen über ein einstufiges zentrales Koppelfeld (SN) mit mehreren Zeitkanalkopplern (TSU1...TSUm) verbunden sind, das eine eigene Koppelfeldsteuerung (SGC) hat.

6. Vermittlungsanlage nach Anspruch 5, d a d u r c h g e k e n n z e i c h n e t , daß das zentrale Koppelfeld (SN) zwei Zeitkanalkoppelstufen hat, zwischen denen eine oder mehrere Raumkanalkoppelstufen eingefügt sind.

7. Vermittlungsanlage nach einem der Ansprüche 4 bis 6, d a d u r c h g e k e n n z e i c h n e t , daß das zentrale Steuerwerk (CP) und das mehrstufige zentrale Koppelfeld (SN) dupliziert sind.

8. Vermittlungsanlage nach einem der vorhergehenden Ansprüche, d a d u r c h g e k e n n z e i c h n e t , daß die dezentralen Zeitkanalkoppler (TSU) jeweils mit einer Multikonferenzeinrichtung (MCU) ausgerüstet sind.

**Europäisches Patentamt**

**EUROPÄISCHER RECHERCHENBERICHT**

0006134

Nummer der Anmeldung

EP 79 10 1482

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | H 04 Q 11/04 3/54 |
| | 1978 INTERNATIONAL CONFERENCE ON COMMUNICATIONS, Band 3, 4-7 Juni 1978, Toronto, CA, ARRIGONI et al.: "Proteo: an example of system flexibility for introduction in a telecom network" Seiten 37.1.1 bis 37.1.5 <br><br> * Gesamter Artikel * <br><br> -- | 1,2,5-7 | |
| | 1978 INTERNATIONAL CONFERENCE ON COMMUNICATIONS, Band 2, 4-7 Juni 1978, Toronto, CA, CESARATTO et al.: "DMS-200 control structure", Seiten 32.2.1 bis 32.2.5 <br><br> * Seite 32.2.1, rechte Spalte, Zeilen 27-33; Seite 32.2.4, linke Spalte, Zeile 9 bis rechte Spalte, Zeile 29 * <br><br> -- | 1,7 | RECHERCHIERTE SACHGEBIETE (Int. Cl.²) <br><br> H 04 Q 11/04 3/54 |
| | NTC '77 CONFERENCE RECORD, Band 3, Dezember 1977, New York, US, SVALA: "DSS-1, A digital local switching system with remote line switches", Seiten 39:5-1 bis 39:5-7 <br><br> * Seite 39:5-1, rechte Spalte, Zeile 50 bis Seite 39:5-3, linke Spalte, Zeile 28; Seite 39:5-4, linke Spalte, Zeilen 14-55 * <br><br> -- | 1,7 | |
| | PROCEEDINGS NATIONAL ELECTRONIC CONFERENCE, Band 31, 1977, New York, US, SCOTT: "Local digital switching control concepts", Seiten 39,40,42 <br><br> * Seite 40, rechte Spalte, | 1,2 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

./.

Der vorliegende Recherchenbericht wurde für alle Patentansprüche erstellt.

| Recherchenort | Abschlußdatum der Recherche | Prüfer |
|---|---|---|
| Den Haag | 19-09-1979 | DE MUYT |

EPA form 1503.1 06.78

Europäisches
Patentamt

EUROPÄISCHER RECHERCHENBERICHT

0006134

Nummer der Anmeldung

EP 79 10 1482
-2-

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | -- | | |
| | ELECTRICAL COMMUNICATION, Band 42, Heft 3, 1967, London, GB, DEJEAN et al.: "Dispersed tele-communication network structure", Seiten 402-414 | 3 | |
| | * Seiten 405,406, Absatz 1.2.2 * | | |
| | -- | | |
| | CONFERENCE ON SWITCHING TECHNIQUES FOR TELECOMMUNICATIONS NETWORKS, April 1969, London, GB, WARD et al.: "A multi processor control unit for a stored programm switching system", Seiten 123-126 | 3 | RECHERCHIERTE SACHGEBIETE (Int. Cl.³) |
| | * Seite 124, Zeilen 27-33 * | | |
| | -- | | |
| | DE - A - 2 602 159 (SIEMENS) | 3 | |
| | * Seite 15, Zeile 14 bis Seite 17, Zeile 23 * | | |
| | -- | | |
| D | 1978 INTERNATIONAL ZURICH SEMINAR ON DIGITAL COMMUNICATIONS, 7-9 März 1978, Zürich, CH, HORIKI et al.: "Design philosophies on local digital switching systems" Seiten B2.1 bis B2.5, | 1,6,7 | |
| | * Seiten B2.3 bis B2.5, Absatz 4 * | | |
| | -- | | |
| P | TELCOM REPORT, Band 2, Heft 3, März 1979, München, DE, SUCKFULL: "Architektur einer neuen Linie digitaler öffentlicher Fern-sprechvermittlungen", Seiten 174-183 ./. | 1-8 | |

| Europäisches | |
| Patentamt | |

EPA Form 1503.2  06.78

| **EINSCHLÄGIGE DOKUMENTE** | | | **KLASSIFIKATION DER ANMELDUNG (Int.Cl.³)** |
|---|---|---|---|
| Kategorie | Kennzeichnung des Dokuments mit Angabe, soweit erforderlich, der maßgeblichen Teile | betrifft Anspruch | |
| | * Gesamter Artikel * <br><br> -- <br><br> INTERNATIONAL SWITCHING SYMPOSIUM Oktober 1976, Kyoto, JP, ALTEHAGE et al.: "PCM switching system EWSD with TDM switching network for long-distance and local transit traffic ",Seiten 141-4-1 bis 141-4.6 <br><br> * Seiten 141-4-2 bis 141-4-4, Absatz 4 * <br><br> ----- | 4-7 | |
| A | | | **RECHERCHIERTE SACHGEBIETE (Int. Cl.³)** |